# EUROPEAN PATENT APPLICATION

(11) **EP 3 434 943 A1**
(43) Date of publication of application: **30.01.2019**
(21) Application number: 17770035.8
(22) Date of filing: 14.03.2017
(51) Int. Cl.: F16J 15/3232, F16J 15/3212, F16J 15/3224, F16J 15/3236

(54) **SEALING DEVICE**

(30) Priority: 22.03.2016 JP 2016056495
(71) Applicant: NOK Corporation, Minato-ku Tokyo 105-8585 (JP)
(72) Inventor: WATANABE, Mitsuo, Kitaibaraki-shi Ibaraki 319-1535 (JP)
(74) Representative: TBK
(86) International application number: PCT/JP2017/010079
(87) International publication number: WO 2017/163992

(57) **Abstract**

Provided is a sealing device with which an improved eccentric following ability is realized. The sealing device includes: resin packing 100 having an outer peripheral lip 120, an inner peripheral lip 130 and an annular mounting groove 110, the mounting groove 110 being provided on a sealed-region side (H) of the packing 100, the outer peripheral lip 120 being located on a radially outward side of the packing 100 with respect to the mounting groove 110, and the inner peripheral lip 130 being located on a radially inward side of the packing 100 with respect to the mounting groove 110; and a spring 200 having an outer peripheral portion 210 that presses the outer peripheral lip 120 radially outwardly and an inner peripheral portion 220 that presses the inner peripheral lip 130 radially inwardly, the spring 200 being mounted in the mounting groove 110, wherein the inner peripheral lip 130 has an first annular groove 111 in its outer peripheral surface, the first annular groove 111 being formed adjacent to a groove bottom of the mounting groove 110.

## Description

### [Technical Field]

The present invention relates to a sealing device for sealing an annular gap between a shaft and a housing.

### [Background Art]

PTFE (polytetrafluoroethylene) is used as a packing material for sealing an annular gap between a shaft and a housing that move relative to each other. Advantages of PTFE are that PTFE can be used in high temperatures and under high pressure, is highly resistant to chemicals, and slides easily. A disadvantage of PTFE, meanwhile, is that when PTFE is used in a high-temperature environment in particular, plastic deformation (settling) is likely to occur. When settling occurs on a seal lip of the packing, a sealing performance deteriorates.

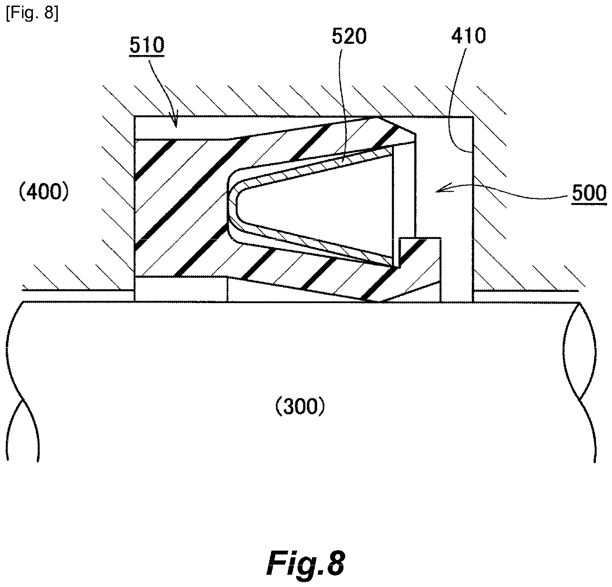

Hence, in a conventional technique, by mounting a metal spring in an annular mounting groove formed in the packing, the seal lip is kept tightly sealed to an outer peripheral surface of the shaft and an inner peripheral surface of a shaft hole in the housing (see PTL 1 and 2). A sealing device according to this conventional example will now be described with reference to Fig. 8. Fig. 8 is a schematic sectional view illustrating a sealing structure according to this conventional example. A sealing device 500 is used to seal an annular gap between a shaft 300 and a housing 400 that move relative to each other. The sealing device 500 is mounted in an annular groove 410 provided in an inner periphery of the housing 400. Further, the sealing device 500 is constituted by U-packing 510 having a U-shaped cross-section, and a metal spring 520. By providing the metal spring 520 in this manner, when PTFE is used as the material of the U-packing 510, the sealing performance can be maintained even after settling occurs in the U-packing 510.

It is known, however, that when a sealing device is used in an application where the shaft is eccentric with respect to the housing, PTFE packing typically exhibits an inferior following ability to rubber packing, leading to an increase in the likelihood of leakage. To solve this problem, a load exerted by the aforesaid metal spring may be increased. In this case, however, frictional resistance between the packing and the shaft increases. Alternatively, the ease with which the lip of the packing deforms may be enhanced by reducing an overall thickness of the lip. However, when the overall thickness of the lip is reduced excessively, the lip may deform in an abnormal manner. Furthermore, the thickness of the lip inevitably decreases over time due to sliding wear, leading to a reduction in lifespan. The degree to which the overall thickness of the lip can be reduced is therefore limited.

### [Citation List]

### [Patent Literature]

[PTL 1]
   Japanese Utility Model Application Publication No. S63-27763
[PTL 2]
   Japanese Patent Application Publication No. 2015-135137

### [Summary of Invention]

### [Technical Problem]

An object of the present invention is to provide a sealing device having an improved eccentric following ability.

### [Solution to Problem]

The present invention employs following means to solve the problem described above.

A sealing device according to the present invention seals an annular gap between a shaft and a housing, and includes:
resin packing having an outer peripheral lip, an inner peripheral lip and an annular mounting groove,
   the mounting groove being provided on a sealed-region side of the packing, the sealed region being a region where fluid is to be sealed,
   the outer peripheral lip being located on a radially outward side of the packing with respect to the mounting groove, and
   the inner peripheral lip being located on a radially inward side of the packing with respect to the mounting groove; and
a spring having an outer peripheral portion that presses the outer peripheral lip radially outwardly and an inner peripheral portion that presses the inner peripheral lip radially inwardly, the spring being mounted in the mounting groove,
wherein the inner peripheral lip has a first annular groove in its outer peripheral surface, the first annular groove being formed adjacent to a groove bottom of the mounting groove.

According to the present invention, the spring is mounted in the mounting groove in the resin packing, and therefore a sealing performance is maintained even when plastic deformation (settling) occurs in the outer peripheral lip and the inner peripheral lip of the packing. Further, because of the first annular groove formed adjacent to the groove bottom of the mounting groove in the outer peripheral surface of the inner peripheral lip, the inner peripheral lip deforms easily at the first annular groove. Hence, even when the shaft is eccentric with respect to the housing, the inner peripheral lip can follow the shaft easily, and as a result, a superior eccentric following ability is realized.

The first annular groove is preferably formed of a curved surface having an arc-shaped cross-section when cut on a plane that includes a central axis of the packing.

This configuration enables stress to be prevented from concentrating in a part of the annular groove when the inner peripheral lip deforms.

The inner peripheral lip preferably has a second annular groove in its inner peripheral surface, the second annular groove being formed in a position deviating further toward the sealed-region side with respect to the first annular groove in an axial direction.

This configuration enables the inner peripheral lip to deform even more easily, and as a result, the eccentric following ability can be further improved.

The second annular groove is preferably formed of a curved surface having an arc-shaped cross-section when cut on a plane that includes the central axis of the packing.

This configuration enables stress to be prevented from concentrating in a part of the second annular groove when the inner peripheral lip deforms.

### [Advantageous Effects of Invention]

According to the present invention, as described above, an improved eccentric following ability can be realized.

### [Brief Description of Drawings]

[Fig. 1]

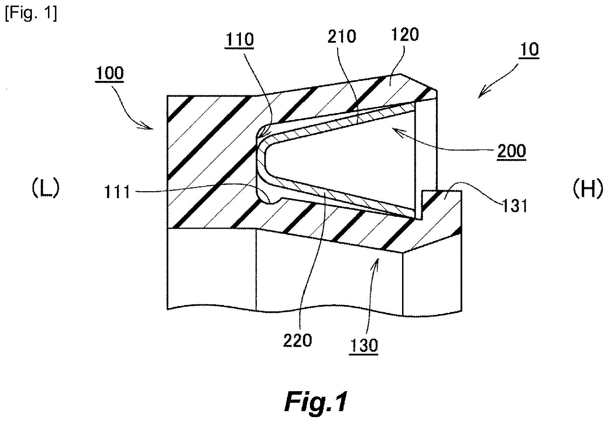

   Fig. 1 is a schematic sectional view of a sealing device according to a first embodiment of the present invention.
[Fig. 2]

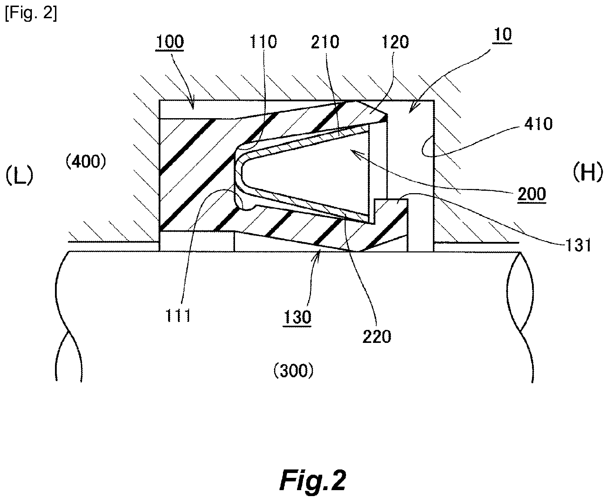

   Fig. 2 is a schematic sectional view illustrating a sealing structure according to the first embodiment of the present invention.
[Fig. 3]

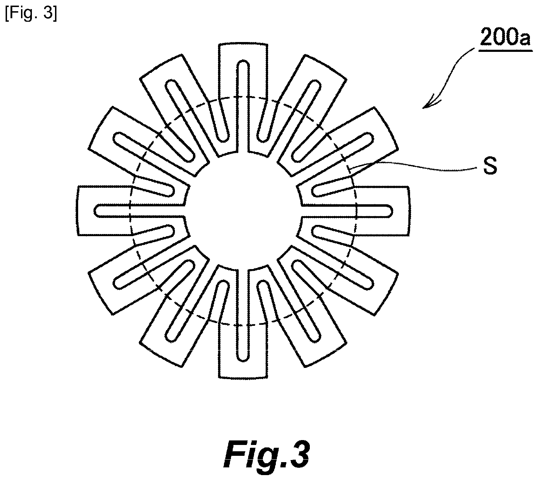

   Fig. 3 is a plan view showing a condition prior to a process for bending a spring according to the first embodiment of the present invention.
[Fig. 4]

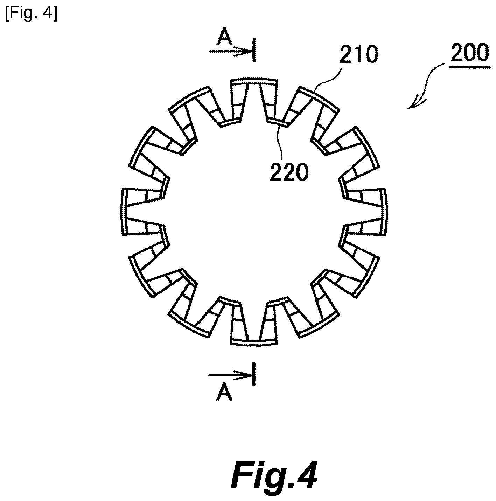

   Fig. 4 is a plan view of the spring according to the first embodiment of the present invention.
[Fig. 5]

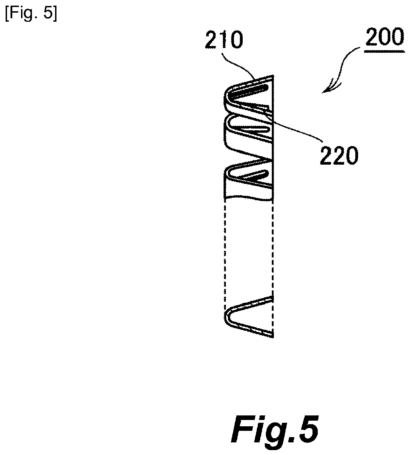

   Fig. 5 is a sectional view of the spring according to the first embodiment of the present invention.
[Fig. 6]

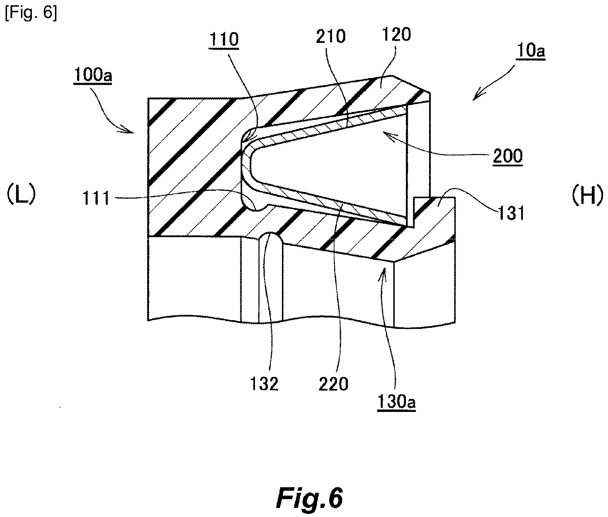

   Fig. 6 is a schematic sectional view of a sealing device according to a second embodiment of the present invention.
[Fig. 7]

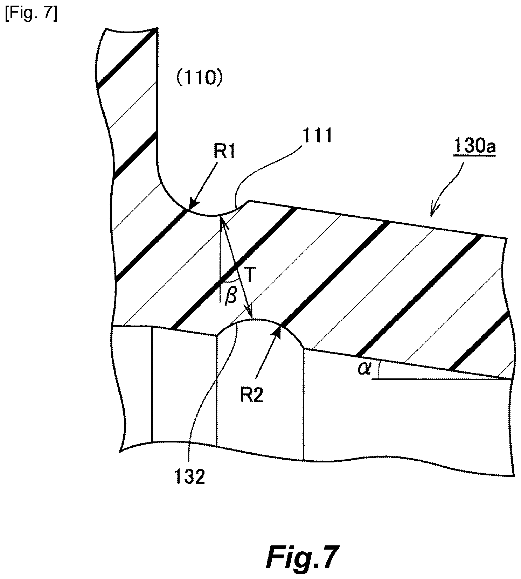

   Fig. 7 is a partially enlarged sectional view of packing according to the second embodiment of the present invention.
[Fig. 8]
   Fig. 8 is a schematic sectional view illustrating a sealing structure according to a conventional example.

### [Description of Embodiments]

Exemplary embodiments of the present invention will be described in detail below with reference to the figures. Note, however, that unless specific description is provided to the contrary, the present invention is not limited to dimensions, materials, shapes, relative arrangements, and so on of constituent components described in the embodiment.

### (First Embodiment)

Referring to Figs. 1 to 5, a sealing device according to a first embodiment of the present invention will be described. Fig. 1 is a schematic sectional view of the sealing device according to the first embodiment of the present invention. Fig. 1 shows a cross-section cut on a plane that includes a central axis of the sealing device. Fig. 2 is a schematic sectional view illustrating a sealing structure according to the first embodiment of the present invention. Fig. 2 likewise shows a cross-section cut on a plane that includes the central axis of the sealing device. Fig. 3 is a plan view showing a condition prior to a process for bending a spring according to the first embodiment of the present invention. Fig. 4 is a plan view of the spring according to the first embodiment of the present invention. Fig. 5 is a sectional view of the spring according to the first embodiment of the present invention. Note that Fig. 5 is an AA sectional view of Fig. 4.

The sealing device according to this embodiment is used to seal an annular gap between a shaft and a housing. The sealing device according to this embodiment can be used favorably in a mechanism in which the shaft and the housing move relative to each other. The sealing device according to this embodiment can also be applied to any one of a configuration in which the shaft reciprocates relative to the housing, a configuration in which the shaft rotates relative to the housing, a configuration in which the shaft swings relative to the housing, and any combination thereof. The sealing device according to this embodiment can also be used favorably in an environment where the shaft is eccentric with respect to the housing.

### <Configuration of Sealing Device>

A configuration of a sealing device 10 according to this embodiment will now be described. The sealing device 10 according to this embodiment is constituted by resin packing 100, and a metal spring 200. Carbon fiber, glass fiber, or PTFE (polytetrafluoroethylene) containing a filler such as bronze powder can be used favorably as a material of the packing 100. Stainless steel can be used favorably as a material of the spring 200.

As described above, the sealing device 10 is used to seal an annular gap between a shaft 300 and a housing 400. For example, the sealing device 10 is mounted in an annular groove 410 formed in an inner peripheral surface of a shaft hole of the housing 400 in order to seal an annular gap between an outer peripheral surface of the shaft 300 and the inner peripheral surface of the shaft hole in the housing 400 (see Fig. 2). Note that in Figs. 1 and 2, a right side of the figures corresponds to a sealed-region side (H), the sealed region being a region in which fluid is to be sealed. A left side of Figs. 1 and 2, meanwhile, corresponds to an opposite side (L) to the sealed region in which the fluid is sealed. Fluid pressure generated by the fluid to be sealed causes the pressure on the sealed-region side (H) to increase such that the pressure on the opposite side (L) is lower than the pressure on the sealed-region side (H). In this embodiment, the packing 100 is fixed to the housing 400 by being mounted in the annular groove 410 such that when the shaft 300 moves relative to the housing 400, the packing 100 and the shaft 300 slide relative to each other.

The packing 100 according to this embodiment has a rotationally symmetrical shape. The packing 100 includes an outer peripheral lip 120, an inner peripheral lip 130 and an annular mounting groove 110. The annular mounting groove 110 is provided on the sealed-region side (H) of the packing 100. The outer peripheral lip 120 is located on a radially outward side of the packing 100 with respect to the annular mounting groove 110. The inner peripheral lip 130 is located on a radially inward side of the mounting groove 110. In the packing 100 according to this embodiment, an annular projection 131 projecting radially outwardly is provided on the inner peripheral lip 130 in order to prevent the spring 200 from falling out. The outer peripheral lip 120 and the inner peripheral lip 130 according to this embodiment are preferably set to have a maximum thickness of 0.7 mm or less.

A first annular groove 111 is formed in an outer peripheral surface of the inner peripheral lip 130 of the packing 100. The first annular groove 111 is formed adjacent to a groove bottom of the mounting groove 110. The first annular groove 111 is formed of a curved surface (a so-called R-surface) having an arc-shaped cross-section when cut on a plane that includes a central axis of the packing 100. A curvature radius of the curved surface is preferably set at no less than 0.3 mm. This configuration effectively prevents stress from concentrating in a part of the first annular groove 111 when the inner peripheral lip 130 deforms.

The spring 200 is mounted in the mounting groove 110 of the packing 100. The spring 200 includes an outer peripheral portion 210 extending radially outwardly from the groove bottom of the mounting groove 110 toward the sealed region (H) such that the outer peripheral portion 210 presses the outer peripheral lip 120 radially outwardly. Further, the spring 200 includes an inner peripheral portion 220 extending radially inwardly from the groove bottom of the mounting groove 110 toward the sealed region (H) such that the inner peripheral portion 220 presses the inner peripheral lip 130 radially inwardly.

Referring to Figs. 3 to 5, the configuration of the spring 200 and a manufacturing method therefor will be described. First, an intermediate product 200a that meanders in a circumferential direction is manufactured by cutting a metal plate (see Fig. 3). Using an imaginary circle S which passes through the intermediate product 200a in a circumferential direction at a middle part along a radial direction as a bending line, a bending process is then implemented to bend respective parts inside the imaginary circle S and parts outside the imaginary circle S in a frontward direction with respect to the page of Fig. 3. In so doing, the spring 200 can be obtained. Fig. 4 is a plan view showing the spring 200 obtained by implementing the bending process and Fig. 5 shows an AA cross-section (albeit partially omitted) of Fig. 4.

### <Advantages of Sealing Device According to This Embodiment>

With the sealing device 10 according to this embodiment, the metal spring 200 is mounted in the mounting groove 110 of the resin packing 100. Therefore, a sealing performance is maintained even when plastic deformation (settling) occurs in the outer peripheral lip 120 and the inner peripheral lip 130 of the packing 100. Further, because of the first annular groove 111 formed adjacent to the groove bottom of the mounting groove 110 in the outer peripheral surface of the inner peripheral lip 130, the inner peripheral lip 130 deforms easily at the first annular groove 111. Hence, even when the shaft 300 is eccentric with respect to the housing 400, the inner peripheral lip 130 can follow the shaft easily, and therefore a superior eccentric following ability is realized. As a result, the sealing performance can be maintained even when the shaft 300 is eccentric with respect to the housing 400. Note that the ease with which the inner peripheral lip 130 deforms in response to the pressing force exerted thereon by the spring 200 is greatly affected by the rigidity of a base part of the inner peripheral lip 130. Therefore, by forming the first annular groove 111 adjacent to the groove bottom of the mounting groove 110, the pressing force generated by the spring 200 can be applied sufficiently effectively. In other words, the inner peripheral lip 130 can follow the shaft 300 sufficiently.

Because the first annular groove 111 is formed of a curved surface having an arc-shaped cross-section when cut on a plane that includes the central axis of the packing 100, stress can be prevented from concentrating in a part of the first annular groove 111 when the inner peripheral lip 130 deforms. As a result, breakage of the inner peripheral lip 130 can be suppressed. In a case where the packing 100 is formed from PTFE, the shape thereof is normally created in a cutting process. Therefore, the first annular groove 111 can be manufactured easily using a cutting blade having a curved surface (an R-surface) shape on a tip end thereof.

### (Second Embodiment)

Figs. 6 and 7 show a second embodiment of the present invention. In this embodiment, a second annular groove is formed additionally on the inner peripheral surface of the inner peripheral lip of the packing according to the first embodiment, described above, while all other configurations and mechanisms are identical to the first embodiment. Hence, identical reference numerals have been given to identical elements, and description thereof has been omitted where appropriate. Fig. 6 is a schematic sectional view of the sealing device according to the second embodiment of the present invention. Fig. 6 shows a cross-section cut on a plane that includes a central axis of the sealing device. Fig. 7 is a partially enlarged sectional view of the packing according to the second embodiment of the present invention, and an enlarged sectional view showing the vicinity of the base of the inner peripheral lip of the packing.

Example applications of a sealing device 10a and a sealing structure obtained using the sealing device 10a are similar to those of the first embodiment, described above, and therefore description thereof has been omitted.

The sealing device 10a, similarly to the first embodiment, is constituted by resin packing 100a and the metal spring 200. The spring 200 is configured identically to the first embodiment, and therefore description thereof has been omitted. The materials of the packing 100a and the spring 200 are as described in the first embodiment.

The packing 100a has a rotationally symmetrical shape. The packing 100a includes the outer peripheral lip 120 located on the radially outward side of the packing 100a with respect to the annular mounting groove 110 provided on the sealed-region side (H), and an inner peripheral lip 130a located on the radially inward side of the packing 100a with respect to the mounting groove 110. In the packing 100a, the annular projection 131 projecting radially outwardly is provided on the inner peripheral lip 130a to prevent the spring 200 from falling out. The outer peripheral lip 120 and inner peripheral lip 130a are preferably set to have a maximum thickness of 0.7 mm or less.

The first annular groove 111 is formed in an outer peripheral surface of the inner peripheral lip 130a of the packing 100a. The first annular groove 111 is formed to be adjacent to the groove bottom of the mounting groove 110. The first annular groove 111 is formed of a curved surface (a so-called R-surface) having an arc-shaped cross-section when cut on a plane that includes the central axis of the packing 100a. A curvature radius R1 of the curved surface is preferably set at no less than 0.3 mm. Thus, stress can be effectively prevented from concentrating in a part of the first annular groove 111 when the inner peripheral lip 130a deforms.

Further, a second annular groove 132 is formed in an inner peripheral surface of the inner peripheral lip 130a of the packing 100a in a position deviating further toward the sealed-region side (H) with respect to the first annular groove 111 in an axial direction (a central axis direction of the packing 100a). The second annular groove 132 is formed of a curved surface (an R-surface) having an arc-shaped cross-section when cut on a plane that includes the central axis of the packing 100a. A curvature radius R2 of the curved surface is preferably set at no less than 0.3 mm. Thus, stress can be effectively prevented from concentrating in a part of the second annular groove 132 when the inner peripheral lip 130a deforms.

A minimum distance T (see Fig. 7) between the first annular groove 111 and the second annular groove 132 is preferably no less than 0.3 mm. Further, in the cross-section shown in Fig. 7, an angle (β) formed by a straight line indicating the minimum distance T and a straight line perpendicular to the central axis of the packing 100a is designed to be identical to an angle (α) of the inner peripheral surface of the inner peripheral lip 130a with respect to the central axis.

With the sealing device 10a configured as described above, similar effects to those of the first embodiment can be obtained. Because of the second annular groove 132 formed additionally in the inner peripheral surface of the inner peripheral lip 130a, the inner peripheral lip 130a deforms even more easily. As a result, the eccentric following ability can be further improved.

Since the second annular groove 132 is formed of a curved surface having an arc-shaped cross-section when cut on a plane that includes the central axis of the packing 100a, stress can be prevented from concentrating in a part of the second annular groove 132 when the inner peripheral lip 130a deforms. As a result, breakage of the inner peripheral lip 130a can be suppressed. The second annular groove 132 is as easy to manufacture as the first annular groove 111.

### (Miscellaneous)

While an example where the annular projection is provided on the inner peripheral lip to prevent the spring from falling out is described in the first and second embodiments, an annular projection may be provided on the outer peripheral lip to prevent the spring from falling out.

### [Reference Signs List]

- 10, 10a: Sealing device
- 100, 100a: Packing
- 110: Mounting groove
- 111: First annular groove
- 120: Outer peripheral lip
- 130, 130a: Inner peripheral lip
- 131: Projection
- 132: Second annular groove
- 200: Spring
- 200a: Intermediate product
- 210: Outer peripheral portion
- 220: Inner peripheral portion
- 300: Shaft
- 400: Housing
- 410: Annular groove

## Claims

1. A sealing device for sealing an annular gap between a shaft and a housing,
the device comprising:
resin packing having an outer peripheral lip, an inner peripheral lip and an annular mounting groove,
the annular mounting groove being provided on a sealed-region side of the packing, the sealed region being a region where fluid is to be sealed,
the outer peripheral lip being located on a radially outward side of the packing with respect to the mounting groove, and
the inner peripheral lip being located on a radially inward side of the packing with respect to the mounting groove; and
a spring having an outer peripheral portion that presses the outer peripheral lip radially outwardly and an inner peripheral portion that presses the inner peripheral lip radially inwardly, the spring being mounted in the mounting groove,
wherein the inner peripheral lip has a first annular groove in its outer peripheral surface, the first annular groove being formed adjacent to a groove bottom of the mounting groove.

2. The sealing device according to claim 1, wherein the first annular groove is formed of a curved surface having an arc-shaped cross-section when cut on a plane that includes a central axis of the packing.

3. The sealing device according to claim 1 or 2, wherein the inner peripheral lip has an second annular groove in its inner peripheral surface, the second annular groove being formed in a position deviating further toward the sealed-region side with respect to the first annular groove in an axial direction.

4. The sealing device according to claim 3, wherein the second annular groove is formed of a curved surface having an arc-shaped cross-section when cut on a plane that includes the central axis of the packing.
